# EUROPEAN PATENT APPLICATION

(11) **EP 4 386 675 A1**
(43) Date of publication of application: **19.06.2024**
(21) Application number: 23174152.1
(22) Date of filing: 18.05.2023
(51) Int. Cl.: G06T 7/80

(54) **EXTERNAL PARAMETER DETERMINATION METHOD AND IMAGE PROCESSING DEVICE**

(30) Priority: 15.12.2022 TW 111148214
(71) Applicant: Acer Incorporated, New Taipei City 221 (TW)
(72) Inventor: CHENG, Chen-Ju, New Taipei City 221, Taiwan (R.O.C.) (TW); HUANG, Chao-Shih, New Taipei City 221, Taiwan (R.O.C.) (TW); LEE, Jian-Wei, New Taipei City 221, Taiwan (R.O.C.) (TW)
(74) Representative: Haseltine Lake Kempner LLP

(57) **Abstract**

The disclosure provides an external parameter determination method and an image processing device (100). The method includes the following. A plurality of images (321, 322) taken by a plurality of cameras for a specific pattern (310) are obtained. A plurality of feature point combinations (331-334) are found by performing a feature point matching algorithm on the plurality of images (321, 322). A slope corresponding to each feature point combination (331-334) is determined. A plurality of candidate combinations are found based on the slope corresponding to each feature point combination (331-334). External parameters between the plurality of cameras are determined based on the plurality of candidate combinations.

## Description

### BACKGROUND

### Technical Field

The disclosure relates to an image processing technology, and in particular to an external parameter determination method and an image processing device.

### Description of Related Art

In related art, feature point identification may be performed on an image taken by a dual-camera system, and external parameters between cameras in the dual-camera system may be determined accordingly. However, since some feature points may not be suitable for a subsequent external parameter determination, screening feature points suitable for the subsequent external parameter determination through a certain mechanism to obtain a good external parameter determination result is needed.

### SUMMARY

In view of this, the disclosure provides an external parameter determination method and an image processing device, which may be used to solve the above technical problem.

The disclosure provides an external parameter determination method suitable for an image processing device, and the method includes the following. Multiple images taken by multiple cameras for a specific pattern are obtained. Multiple feature point combinations in the multiple images are found by performing a feature point matching algorithm on the multiple images. A slope corresponding to each feature point combination is determined. Multiple candidate combinations among the multiple feature point combinations are found based on the slope corresponding to each feature point combination, wherein a slope of each candidate combination is within a preset range. At least one external parameter between the multiple cameras is determined based on the multiple candidate combinations.

An embodiment of the disclosure provides an image processing device, including a storage circuit and a processor. The storage circuit stores a program code. The processor is coupled to the storage circuit and accesses the program code to perform the following. Multiple images taken by multiple cameras for a specific pattern are obtained. Multiple feature point combinations in the multiple images are found by performing a feature point matching algorithm on the multiple images. A slope corresponding to each feature point combination is determined. Multiple candidate combinations among the multiple feature point combinations are found based on the slope corresponding to each feature point combination, wherein a slope of each candidate combination is within a preset range. At least one external parameter between the multiple cameras is determined based on the multiple candidate combinations.

### BRIEF DESCRIPTION OF THE DRAWINGS

FIG. 1 is a schematic diagram illustrating an image processing device according to an embodiment of the disclosure.
FIG. 2 is a flowchart illustrating an external parameter determination method according to an embodiment of the disclosure.
FIG. 3 is a diagram illustrating an application scenario according to the first embodiment of the disclosure.
FIG. 4 is a diagram illustrating an application scenario according to the second embodiment of the disclosure.
FIG. 5 is a diagram illustrating an application scenario according to the third embodiment of the disclosure.

### DESCRIPTION OF THE EMBODIMENTS

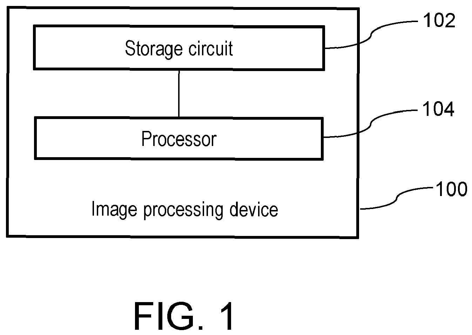

Please refer to FIG. 1, which is a schematic diagram illustrating an image processing device according to an embodiment of the disclosure. In different embodiments, an image processing device 100 may be implemented as various smart devices, computer devices, and/or various devices with image processing capabilities, but is not limited thereto.

In FIG. 1, the image processing device 100 includes a storage circuit 102 and a processor 104. The storage circuit 102 is, for example, any type of fixed or removable random access memory (RAM), read-only memory (ROM), flash memory, hard disk or other similar device or a combination of the devices, which may be used to record multiple program codes or modules.

The processor 104 is coupled to the storage circuit 102 and may be a general purpose processor, a special purpose processor, a conventional processor, a digital signal processor, multiple microprocessors, one or more microprocessors combined with a digital signal processor core, a controller, a microcontroller, an application specific integrated circuit (ASIC), a field programmable gate array (FPGA), any other kind of integrated circuits, state machines, processors for advanced RISC machines (ARM), and the like.

In an embodiment of the disclosure, the processor 104 may access the modules and the program codes recorded in the storage circuit 102 to implement an external parameter determination method proposed by the disclosure, the details of which are described below.

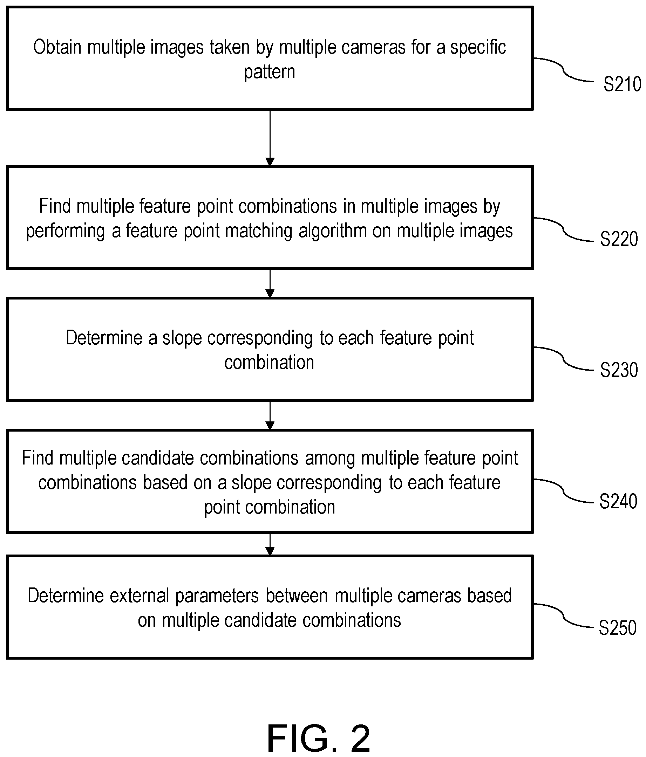

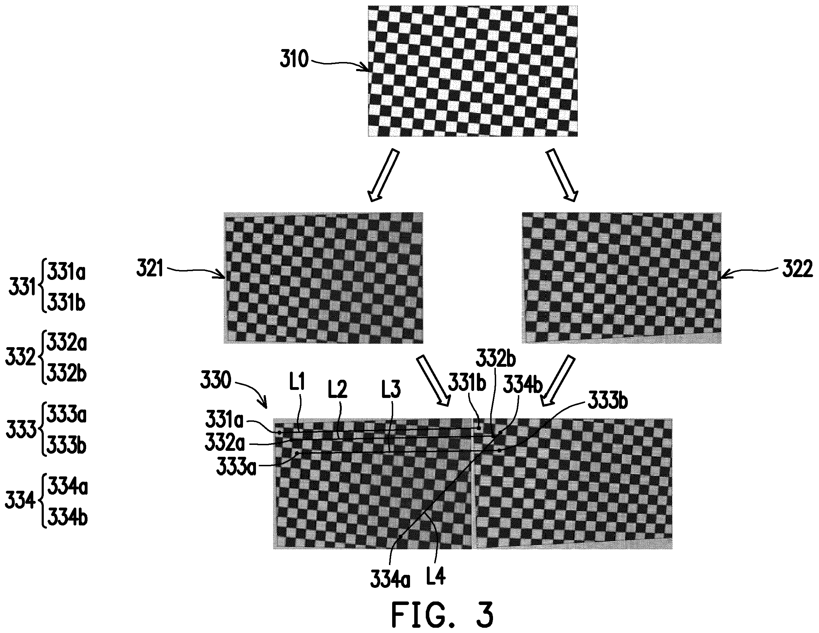

Please refer to FIG. 2, which is a flowchart illustrating an external parameter determination method according to an embodiment of the disclosure. The method of this embodiment may be performed by the image processing device 100 in FIG. 1, and the details of each Step in FIG. 2 will be described below with components shown in FIG. 1. In addition, in order to make the concept of the disclosure easier to understand, the following illustration is supplemented with FIG. 3, and FIG. 3 is a diagram illustrating an application scenario according to the first embodiment of the disclosure.

First, in Step S210, multiple images taken by multiple cameras for a specific pattern 310 are obtained by the processor 104. In an embodiment of the disclosure, the multiple cameras include, for example, a first camera and a second camera, and the first camera and the second camera form a dual-camera system. In this case, a relative position between the first camera and the second camera may be considered fixed. In an embodiment, the dual-camera system may be built into the image processing device 100, but is not limited thereto.

In the scenario of FIG. 3, the specific pattern 310 is, for example, a black and white checkerboard pattern. In this case, the first camera, for example, may be used to take the specific pattern 310 at a first angle of view to obtain a first image 321, and the second camera, for example, may be used to take the specific pattern 310 at a second angle of view to obtain a second image 322.

Next, in Step S220, multiple feature point combinations in the multiple images are found by performing a feature point matching algorithm on the multiple images by the processor 104.

In an embodiment, the feature point matching algorithm performed by the processor 104 is, for example, a random sample consensus (RANSAC) algorithm, but is not limited thereto. In this case, the RANSAC algorithm, for example, may generate a matching result image 330 in response to the first image 321 and the second image 322.

In FIG. 3, the matching result image 330 may include, for example, feature point combinations 331-334, and each feature point combination 331-334 is, for example, a feature point pair, but is not limited thereto. In this embodiment, positions and quantities of the feature point combinations 331-334 shown are for example only, and are not intended to limit the possible implementation manners of the disclosure.

In an embodiment, the first image 321 is determined to have multiple first feature points 331a~334a, and the second image 322 is determined to have multiple second feature points 331b~334b. Each feature combination 331-334 includes one of the first feature points 331a~334a and one of the second feature points 331b~334b.

In FIG. 3, the feature point combination 331 may include the feature points 331a and 331b, and there may be a connecting line L1 between the feature points 331a and 331b. The feature point combination 332 may include the feature points 332a and 332b, and there may be a connecting line L2 between the feature points 332a and 332b. The feature point combination 333 may include the feature points 333a and 333b, and there may be a connecting line L3 between the feature points 333a and 333b. The feature point combination 334 may include the feature points 334a and 334b, and there may be a connecting line L4 between the feature points 334a and 334b.

Afterward, in Step S230, a slope corresponding to each feature point combination 331-334 is determined by the processor 104. Also, in Step S240, multiple candidate combinations among the multiple feature point combinations 331-334 based on the slope corresponding to each feature point combination 331-334 are found by the processor 104, and a slope of each candidate combination is within a preset range.

In an embodiment, the preset range may be determined by a designer according to the specific pattern 310 under consideration, and the preset range may be understood as a range of values that a slope of a connecting line corresponding to a normal feature point combination should have, but is not limited thereto.

In FIG. 3, assuming that individual slopes of the connecting lines L1~L3 corresponding to the feature point combinations 331-333 are all within the preset range, but the slope of the connecting line L4 corresponding to the feature point combination 334 is not within the preset range. In this case, the processor 104 may, for example, determine that the feature point combinations 331-333 belong to the multiple candidate combinations and exclude the feature point combination 334, but it is not limited thereto.

Afterward, in Step S250, external parameters between the multiple cameras based on the multiple candidate combinations (e.g., feature point combinations 331-334) are determined by the processor 104. In an embodiment, the external parameters between the first camera and the second camera include, for example, a relative pitch angle, a relative yaw angle, and a relative roll angle between the first camera and the second camera, but is not limited thereto.

In an embodiment of the disclosure, how to determine the external parameters between the multiple cameras based on the multiple candidate combinations (e.g., the feature point combinations 331-334) may be referred to relevant related art documents regarding determining external parameters, and the details of which will not be repeated here.

In related art, since there is no means to exclude a certain feature point combination according to the slope of the connecting line, all the feature point combinations 331-334 in FIG. 3 may be used to determine the external parameters among the multiple cameras. In this case, the external parameters among the multiple cameras are less accurate, thereby affecting subsequent camera calibration results.

In contrast, since the embodiment of the disclosure excludes the feature point combination 334 whose corresponding slope is not within the preset range after obtaining the feature point combinations 331-334, relatively accurate external parameters may be obtained. In this way, the efficiency and accuracy of subsequent calibration of the multiple cameras can be improved.

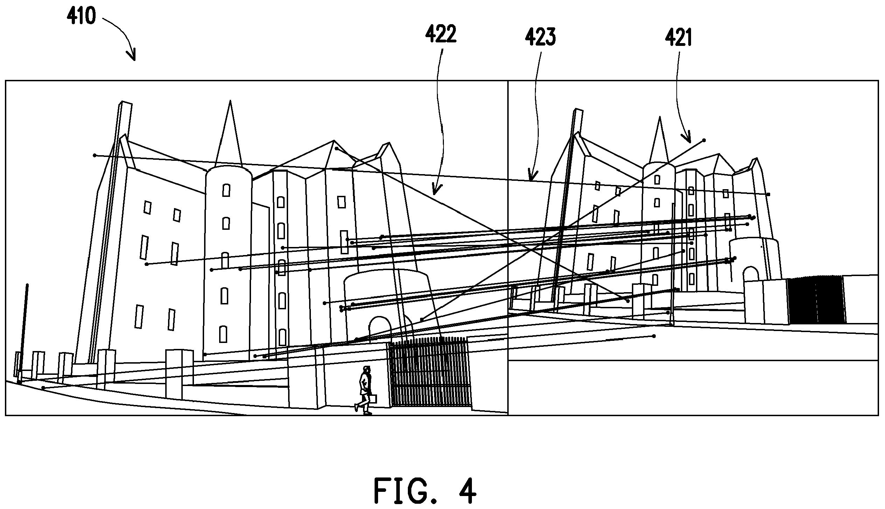

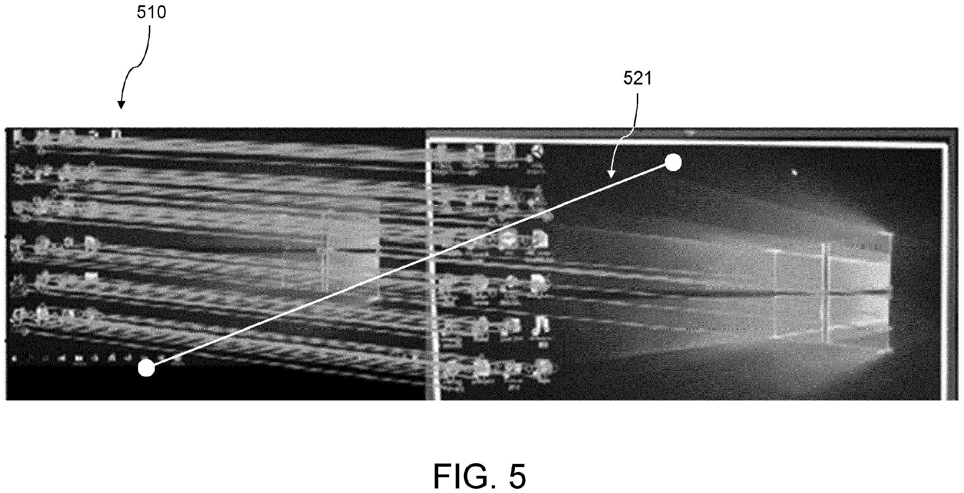

In order to make the concept of the disclosure easy to understand, further description is provided below with reference to FIG. 4 and FIG. 5.

Please refer to FIG. 4, which is a diagram illustrating an application scenario according to the second embodiment of the disclosure. In FIG. 4, a matching result image 410 is, for example, obtained by the processor 104 performing the RANSAC algorithm based on the first image and the second image taken by the first camera and the second camera for another specific pattern (such as a castle image), but is not limited thereto.

It may be seen from FIG. 4 that the matching result image 410 includes multiple connecting lines, each of which corresponds to a feature point combination. In the scenario of FIG. 4, assuming that slopes of connecting lines 421-423 are not within the preset range, the processor 104 may exclude feature point combinations corresponding to the connecting lines 421-423, and use feature point combinations corresponding to remaining connecting lines to determine external parameters between the first camera and the second camera.

Please refer to FIG. 5, which is a diagram illustrating an application scenario according to the third embodiment of the disclosure. In FIG. 5, a matching result image 510 is, for example, obtained by the processor 104 performing the RANSAC algorithm based on the first image and the second image taken by the first camera and the second camera for another specific pattern (such as a computer desktop image), but is not limited thereto.

It can be seen from FIG. 5 that the matching result image 510 includes multiple connecting lines, each of which corresponds to a feature point combination. In the scenario of FIG. 5, assuming that a slope of a connecting line 521 is not within the preset range, the processor 104 may exclude a feature point combination corresponding to the connecting line 521 and use a feature point combination corresponding to remaining connecting lines to determine external parameters between the first camera and the second camera.

To sum up, the method proposed by the embodiments of the disclosure can find a part of the feature point combinations corresponding to the slopes of the connecting lines within the preset range as the candidate combinations among the determined feature point combinations, and determine the external parameters between the multiple cameras based on the candidate combinations. Since another part of feature point combinations corresponding to the slopes of the connecting lines not within the preset range has been excluded, the determined external parameters can be made accurate, thereby being helpful for the subsequent camera calibration operations.

## Claims

1. An external parameter determination method suitable for an image processing device (100), comprising:
obtaining a plurality of images (321, 322) taken by a plurality of cameras for a specific pattern (310);
finding a plurality of feature point combinations (331-334) in the plurality of images (321, 322) by performing a feature point matching algorithm on the plurality of images (321, 322);
determining a slope corresponding to each of the plurality of feature point combinations (331-334);
finding a plurality of candidate combinations among the plurality of feature point combinations (331-334) based on the slope corresponding to each of the plurality of feature point combinations (331-334), wherein a slope of each of the plurality of candidate combinations is within a preset range;
determining at least one external parameter between the plurality of cameras based on the plurality of candidate combinations.

2. The method as claimed in claim 1, wherein, the plurality of cameras comprise a first camera and a second camera; the plurality of images (321, 322) comprise a first image (321) taken by the first camera for the specific pattern (310) and a second image (322) taken by the second camera for the specific pattern (310); the first image (321) is determined to have a plurality of first feature points (331a~334a), and the second image (322) is determined to have a plurality of second feature points (331b-334b); and each of the plurality of feature point combinations (331-334) comprises one of the plurality of first feature points (331a~334a) and one of the plurality of second feature points (331b~334b).

3. The method as claimed in claim 2, wherein the plurality of feature point combinations (331-334) comprise a first feature point combination (331), wherein the first feature point combination (331) comprises a first feature point (331a) among the plurality of first feature points (331a~334a) and a second feature point (331b) among the plurality of second feature points (331b~334b), and a slope corresponding to the first feature point combination (331) comprises a slope of a connecting line (L1~L3) between the first feature point (331a) and the second feature point (331b).

4. The method as claimed in claim 1, wherein the plurality of cameras comprise a first camera and a second camera, wherein the first camera and the second camera form a dual-camera system.

5. The method as claimed in claim 1, wherein the preset range is determined based on the specific pattern (310).

6. The method as claimed in claim 1, wherein the feature point matching algorithm comprises a random sample consensus (RANSAC) algorithm.

7. The method as claimed in claim 1, wherein the specific pattern (310) comprises a black and white checkerboard pattern.

8. The method as claimed in claim 1, wherein the feature point matching algorithm generates a matching result image (330, 410, 510) in response to the plurality images (321, 322), wherein the matching result image (330, 410, 510) comprises the plurality of feature point combinations (331-334) and a connecting line (L1~L3) corresponding to each of the plurality of feature point combinations (331-334).

9. The method as claimed in claim 1, wherein each of the plurality of feature point combinations (331-334) comprises a feature point pair.

10. An image processing device (100), comprising:
a storage circuit (102) storing a program code; and
a processor (104) coupled to the storage circuit (102) and accessing the program code to:
obtain a plurality of images (321, 322) taken by a plurality of cameras for a specific pattern (310);
find a plurality of feature point combinations (331-334) in the plurality of images (321, 322) by performing a feature point matching algorithm on the plurality of images (321, 322);
determine a slope corresponding to each of the plurality of feature point combinations (331-334);
find a plurality of candidate combinations among the plurality of feature point combinations (331-334) based on the slope corresponding to each of the plurality of feature point combinations (331-334), wherein a slope of each of the plurality of candidate combinations is within a preset range;
determine at least one external parameter between the plurality of cameras based on the plurality of candidate combinations.

11. The image processing device (100) as claimed in claim 10, wherein, the plurality of cameras comprise a first camera and a second camera; the plurality of images (321, 322) comprise a first image (321) taken by the first camera for the specific pattern (310) and a second image (322) taken by the second camera for the specific pattern (310); the first image (321) is determined to have a plurality of first feature points (331a~334a), and the second image (322) is determined to have a plurality of second feature points (331b-334b); and each of the plurality of feature point combinations (331-334) comprises one of the plurality of first feature points (331a~334a) and one of the plurality of second feature points (331b~334b).

12. The image processing device (100) as claimed in claim 11, wherein the plurality of feature point combinations (331-334) comprise a first feature point combination (331), wherein the first feature point combination (331) comprises a first feature point (331a) among the plurality of first feature points (331a~334a) and a second feature point (331b) among the plurality of second feature points (331b~334b), and a slope corresponding to the first feature point combination (331) comprises a slope of a connecting line (L1~L3) between the first feature point (331a) and the second feature point (331b).

13. The image processing device (100) as claimed in claim 10, wherein the plurality of cameras comprise a first camera and a second camera, wherein the first camera and the second camera form a dual-camera system.

14. The image processing device (100) as claimed in claim 10, wherein the preset range is determined based on the specific pattern (310).

15. The image processing device (100) as claimed in claim 10, wherein the feature point matching algorithm comprises a random sample consensus (RANSAC) algorithm;
wherein the specific pattern (310) comprises a black and white checkerboard pattern;
wherein the feature point matching algorithm generates a matching result image (330, 410, 510) in response to the plurality images (321, 322), wherein the matching result image (330, 410, 510) comprises the plurality of feature point combinations (331-334) and a connecting line (L1~L3) corresponding to each of the plurality of feature point combinations (331-334);
wherein each of the plurality of feature point combinations (331-334) comprises a feature point pair.
